# EUROPEAN PATENT SPECIFICATION

(11) **EP 0 664 644 B1**
(45) Date of publication and mention of the grant of the patent: **09.08.2000**
(21) Application number: 95100736.8
(22) Date of filing: 20.01.1995
(51) Int. Cl.: H04N 3/233

(54) **Deflection circuit with inner raster distortion correction**
Ablenkschaltung mit Korrektur von Rasterverzerrungen im inneren Teil des Bildes
Circuit de balayage avec correction de distorsion de la partie interne de la trame

(30) Priority: 25.01.1994 GB 9401364
(43) Date of publication of application: 26.07.1995
(73) Proprietor: RCA Thomson Licensing Corporation, Princeton, NJ 08540 (US)
(72) Inventor: Haferl, Peter Eduard, CH-8134 Adliswil (CH)
(74) Representative: Rossmanith, Manfred, Dr.

(56) References cited:
- EP-A- 0 146 345
- EP-A- 0 236 064
- EP-A- 0 332 091
- DE-A- 3 442 818

## Description

Large screen CRT displays may require a high amount of inner raster distortion correction for adequate raster linearity. The commonly used east-west pincushion distortion correction circuit using a diode modulator can correct some inner pincushion distortion. It has been found, however, that the correction of larger inner raster distortion errors is difficult. Furthermore, because prior art correction of inner raster distortion is difficult or impossible to be adjusted, the results are often unsatisfactory.

Horizontal deflection circuits commonly employ resonant trace and retrace principles. During retrace, the deflection circuit forms a high frequency parallel resonant circuit: energy is supplied to the deflection circuit from the flyback transformer primary winding. During the trace interval, a deflection switch provides a low frequency series resonant circuit formed by the deflection yoke winding and the S-shaping capacitor. As a result, energy circulates from the yoke to the S-capacitor and back to the yoke in one trace period. This produces a sinewave shaped deflection current with a conduction angle of approx. 130°, starting at about 115° and ending at about 245°. The retrace provides a fast return of the deflection current from the nominal 245° position at the end of trace to the nominal 130° position at the start of trace.

The value of the S-capacitor determines the conduction angle or the S-shaping of the deflection current. Thus, the S-capacitor is selected for best horizontal linearity. The voltage across the S-capacitor is cosine shaped. The amplitude is highest at the center of trace, when the deflection current is zero. The correction of inner raster distortion requires modulation of the S-shaping as a function of the distance along the vertical axis of the raster display, i.e. from top to the center and from the center to the bottom of the raster. This is achieved by modulation of the voltage across the S-capacitor. The modulated voltage appears also across the horizontal yoke and causes a modulation of the deflection current.

EP-A-0 146 345 discloses an S-correction circuit having a second S-shaping capacitor coupled in parallel with the main S-shaping capacitor by action a switching transistor. The switching is controlled by modulating the switching point at a vertical rate.

EP-A-0 332 091 discloses a raster correction circuit having source of a first input signal related to a deflection frequency, a first retrace capacitance, a second retrace capacitance, and first and second retrace pulse voltages are generated therein. A supply inductance coupled the first and second retrace pulse voltages to a load circuit. A switching arrangement is coupled to a source of a second input signal. The second input signal is related to a second deflection frequency and the switching varies in accordance with the second input signal.

The invention is set out in claim 1 and provides an inner raster correction circuit allowing adjustment of correction amplitude and of overall S-shaping. A deflection winding is coupled in series with an S-correcting trace capacitor. A deflection switch is coupled to the deflection winding and responsive to a source of an input signal at a first frequency related to a deflection rate, for generating in the deflection winding a trace current during a trace interval and a retrace voltage during a retrace interval. An inside raster distortion correction circuit is coupled across the trace capacitor, for varying the amount of S-correction provided by the trace capacitor. The inside raster distortion correction circuit comprises a distortion correction switch, which is conductive and non-conductive as a function of the value of a source of modulating signal at a second frequency.
Figures 1a to 1f show raster displays with different raster distortions, and the variation of the S-correction which is necessary to correct such distortions.
Figure 2 shows a diagram in block and schematic form of a deflection circuit of a preferred embodiment of the invention.
Figures 3a to 3o show current and voltage waveforms at several points in the circuit of Figure 2, and
Figure 4 shows an alternate embodiment of the invention.

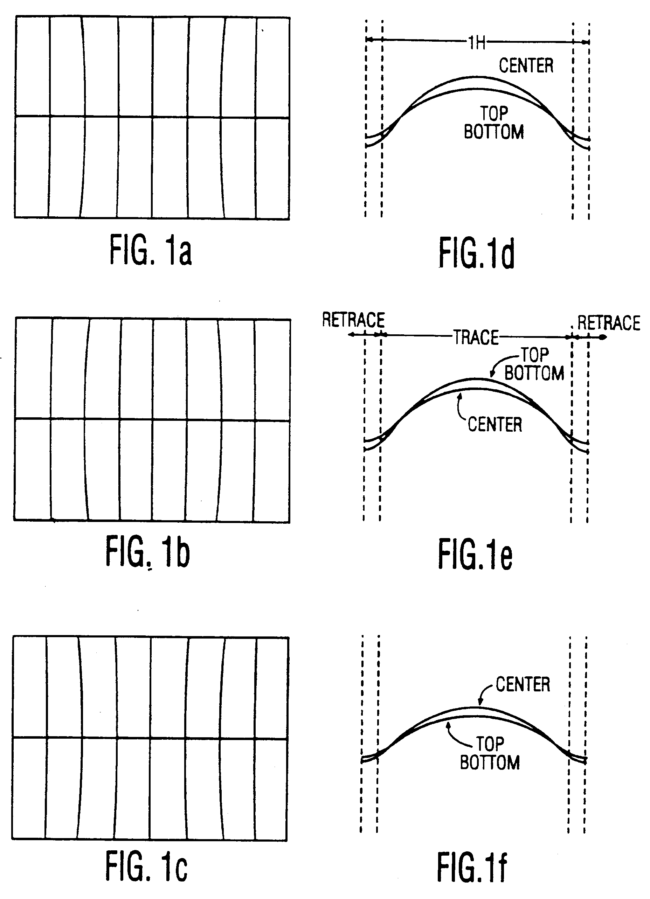

Fig. 1 shows raster displays with different inner raster distortions. Also shown are waveforms of the voltage across the S-capacitor and the modulation envelope. It is assumed that outside pincushion distortion is corrected by amplitude modulation of the deflection current. This is illustrated by the straight vertical lines at the extreme left and right hand side of the shown raster displays.

Fig. 1a shows an inner pincushion distortion error. The correction, shown in Fig. 1d, requires more S-shaping in the center than at top and bottom.

Fig. 1b shows an inner barrel error. As shown in Fig. 1e, more S-shaping is required at top and bottom than in the center.

Fig. 1c shows a second order inner pincushion error. The average space differs between the vertical lines at center and top/bottom. As shown in Fig. 1f, the correction requires less pincushion and a flatter waveform shape at top and bottom. This is obtained by a modulation frequency higher than line frequency.

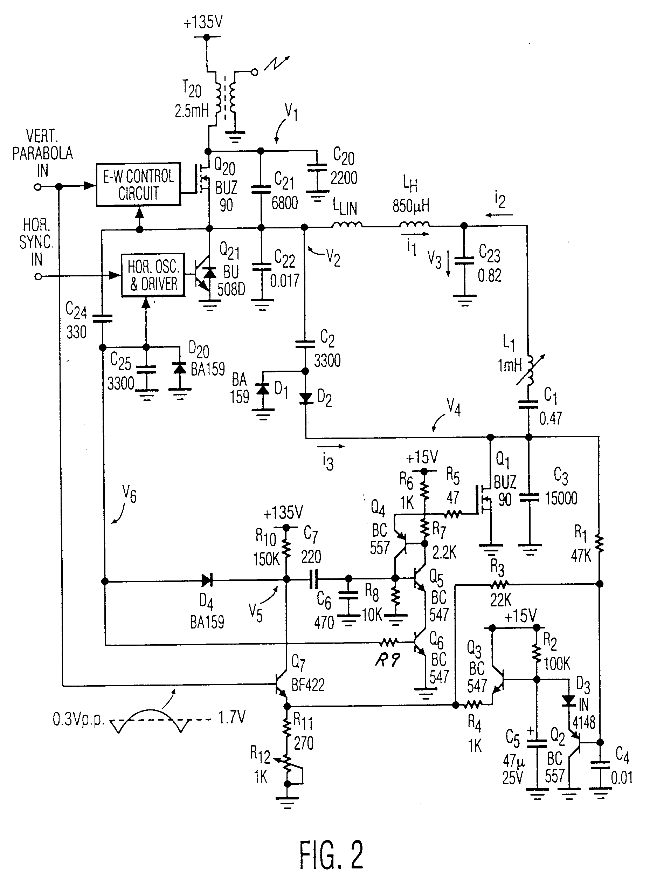

Fig. 2 shows a circuit diagram of a horizontal deflection circuit with outside pincushion correction and with the inventive circuit for the correction of the inner raster distortion such as inner pincushion distortion. The circuit has been used to generate deflection current for a SONY Trinitron picture tube Type A68JYL61X.

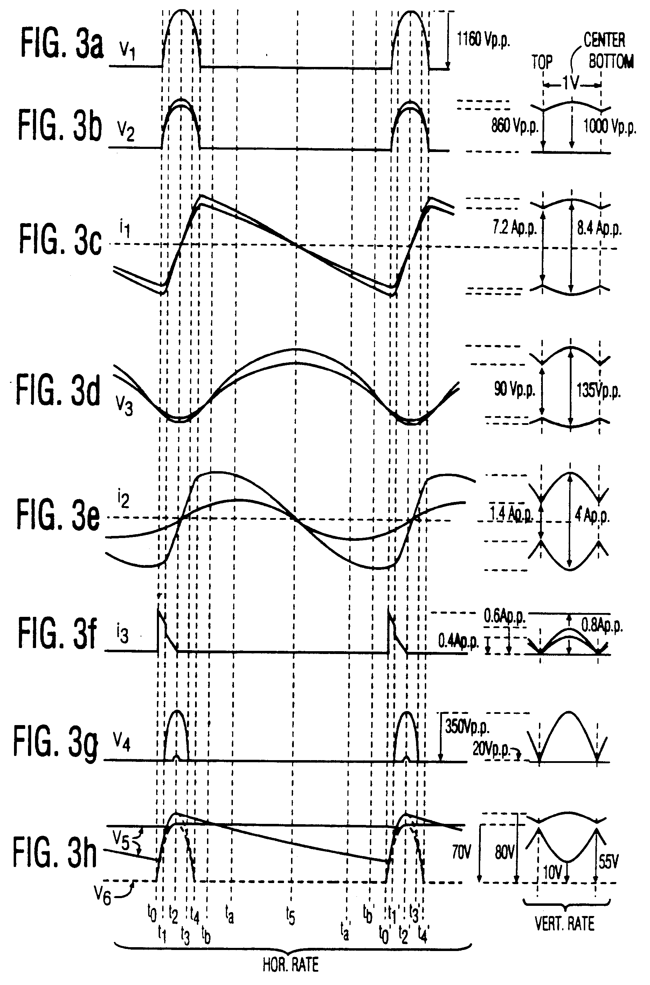

Figs. 3a to 3h shows waveforms at the horizontal rate, and Figs. 3i to 3o show waveforms at the vertical rate, from the circuit of Fig. 2.

The primary winding of flyback transformer T₂₀ supplies energy via E-W switching transistor Q₂₀ to the horizontal deflection circuit consisting of switching transistor Q₂₁, retrace capacitor C₂₂, linearity coil L_{LIN}, horizontal yoke winding L_{H} and S-shaping capacitor C₂₃. Transistor Q₂₁ is driven in conventional manner by the horizontal oscillator and driver. The E-W control circuit turns off Q₂₀ at controllable instants during the first half of the retrace interval to amplitude modulate the retrace voltage V₂ across C₂₂ and in turn the deflection current i₁ flowing through L_{H}. Capacitor C₂₀ acts as retrace capacitor for the primary winding of T₂₀. Capacitor C₂₁ couples the transformer retrace circuit T₂₀, C₂₀ to the deflection retrace circuit C₂₂, L_{H} and C₂₃. The retrace voltage V₂ is divided by C₂₄, C₂₅ to obtain a low voltage retrace pulse V₆ across clamping diode D₂₀.

Waveform 3a shows the flyback transformer retrace voltage V₁ non modulated because of stabilized supply voltage +135V.

Waveform 3b shows the deflection circuit retrace voltage V₂ modulated by the action of Q₂₀.

Waveform 3C illustrates the amplitude modulated deflection current i₁ for the correction of the outside pincushion distortion. The waveforms on the right side show the parabolically shaped envelopes at the vertical rate.

The inside pincushion correction circuit consists of L₁, C₁, retrace capacitor C₃, switching transistor Q₁, D₁, D₂ and C₂. Transistors Q₄ to Q₇ generate the gate pulses for Q₁. Transistors Q₂, and Q₃ provide feedback for linear operation. Correction current i₂ flows through Q₁, C₁, L₁ and C₂₃ during the trace interval. Q₁ is turned off at modulated instants during the first half of the retrace interval t₁-t₂, and turns on during interval t₂-t₃ when the integrated anti parallel diode of Q₁ becomes forward biased. When Q₁ is turned off, current i₂ flows through C₃ and produces a retrace voltage V₄, shown in Fig. 3g. Deflection energy is fed via C₂ and D₂ into C₃ during the modulated interval t₁-t₂ to enhance the amplitude modulation of i₂.

Waveform 3e shows the envelope of the modulated current i₂. The low amplitude of i₂ is obtained when Q₁ does not turn off, or when it turns off just before t₂. The sine wave shaped i₂ with peak amplitudes at tₐ and tₐ' is generated by V₃ across C₂₃. The amplitude of i₂ increases when the turn off instant of Q₁ is advanced toward t₁. During the retrace interval t₁-t₃, the current path of i₂ is switched to a higher frequency by the insertion of C₃. The rapid current change between t₁-t₃ results in a frequency decrease of i₂ between t₃ - t₁' indicated by the shift of the amplitude peaks from tₐ to t_{b} and from tₐ' to t_{b}'.

The i₂ current waveform with peaks at t_{b} and t_{b}' is nearer to the resonant frequency of the i₂ current path, resulting in a higher amplitude than the waveform with the peaks at tₐ and tₐ'. Thus L₁ is adjusted to a resonant frequency slightly lower than the envelope of i₂, i.e. 2(t₄ - t'₀)⁻¹. A further increase of the i₂ amplitude modulation is obtained by deflection retrace current i₃. During interval t₀ - t₁, down-ramping current i₃ flows through Q₁. When Q₁ opens at t₁, i₃ decreases because of the impedance formed by C₃, C₁, L₁ and C₂₃. Between t₁-t₂, i₃ charges C₃, producing an increase of V₄ and in turn of i₂. When the turn-off instant of Q₁ is retarded toward t₂, i₃ charges C₃ during a shorter time interval, resulting in less V₄ amplitude. Diode D₂ is non-conductive during interval t₂-t₃. Capacitor C₂ discharges via D₁ during this time.

The turn-off instant of Q₁ is advanced in a parabolic manner from t₂ at the top of the raster to t₁ at the center of the raster, and retarded to t₂ at the bottom of the raster to produce the current i₂ envelope of waveform 3e and the retrace voltage V₄ envelope of waveform 3g. The waveforms at vertical rate on the right hand side illustrate the parabolic modulation similar to the input voltage at the base of Q₇. Currents i₁ and i₂ are added in the S-shaping capacitor C₂₃ to modulate voltage V₃ of waveform 3d.

As a result, deflection current i₁, waveform 3c, shows S-shaping modulated at the vertical rate. Current i₁ is more S-shaped at the center of the raster (high amplitude) than at top and bottom of the raster (low amplitude).

Deflection retrace voltage V₆, dashed line waveform 3h, enables, via R₉, the gate turn off circuit Q₆, Q₅ and Q₄ during interval t₀ - t₄. Voltage V₆ charges capacitor C₇ via D₄. The leading edge of the charge current pulse turns on Q₅ and Q₄ to turn off Q₁. Q₄ and Q₅ are held conductive by positive feedback until t₄ when Q₆ is turned off. The parabolically shaped collector current of Q₇ discharges C₇ in a way that D₄, Q₅ and Q₄ become conductive at modulated instants during interval t₁-t₂, as shown by voltage V₅, solid waveform 3h. Voltage V₆, dotted waveform, is amplitude modulated due to the outside pincushion correction circuit. Transistor Q₇ discharges C₇ more rapidly at the center of the raster than at top and bottom, illustrated by the downramping voltage V₅, solid waveform. The amplitude of V₅ at the end of trace determines the turn-on instant of D₄, Q₅ and Q₄. The feedback path R₁, smoothing capacitor C₄ and R₃ linearizes the operation of the inside pincushion correction circuit. The correction amplitude is adjustable by variable resistor R₁₂. The working point of Q₇ is controlled by Q₂ and Q₃ in a manner that voltage V₄ is minimum at the top and bottom of the raster to obtain a current i₂ envelope as illustrated by waveform 3e. Transistor Q₂ discharges capacitor C₅, via D₃, to the lowest voltage of the vertical rate envelope of V₄ across C₄. The voltage across C₅ is fed via emitter follower Q₃ and R₄ to the emitter of Q₇ to reduce the collector current and to minimize voltage V₄ at the top and bottom of the raster.

The overall S-shaping of the horizontal deflection circuit can be optimized by fine tuning of L₁. This slightly changes the amplitudes of the waveform envelopes of Fig. 3d and 3e. The limits of L₁ tuning are:

If L₁ is too small, it will cause deflection compression at the end of trace.

If L₁ is too large, it will produce inadequate inner pincushion correction.

It is to be noted that the direction of the correction current in the S-capacitor may be the same or opposite to the deflection current, resulting in additive or subtractive correction. In this way, correction may be provided for either inner pincushion or inner barrel distortion.

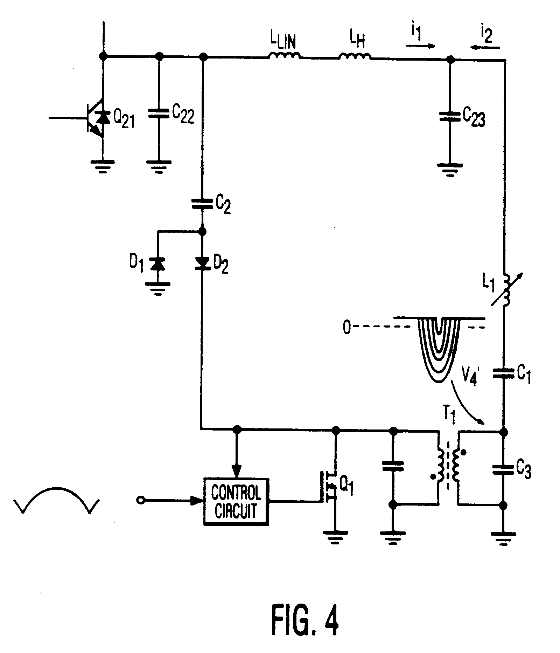

Fig. 4 shows a an alternative embodiment of the invention which employs a transformer T₁ to obtain a negative voltage V'₄' across C₃. The envelope of the modulated current i₂ decreases to zero and increases in the opposite phase from that shown in Fig. 3e. Thus, in capacitor C₂₃, current i₂ subtracts from i₁. Accordingly, the component values of C₂₃, L₁, C₁ and C₃ are smaller at the cost of providing transformer T₁.

The amount of inner raster correction is adjustable independent of the outside raster correction. Furthermore, since the inner raster correction circuit is independent of the flyback transformer, the inner raster correction is not affected by changes in flyback transformer loading, such as by changes in display screen brightness.

## Claims

1. A deflection apparatus with independent inside and outside raster distortion correction, comprising:
a) a deflection winding (L_{H}) coupled to an S-correction trace capacitor (C₂₃), said combination being coupled in parallel to a retrace capacitor (C₂₂);
b) a source of an input signal (synch) at a first frequency, said first frequency being at a deflection rate;
c) a deflection switch (Q₂₁) coupled to said deflection winding (L_{H}), and responsive to said source of input signal, for generating in said deflection winding a trace current (i₁) during a trace interval and a retrace voltage (V₂) during a retrace interval;
d) a source of modulating signal at a second frequency;
e) a first raster distortion correction switch circuit means (Q₂₀) for correcting outside raster distortion coupled to said retrace capacitor (C₂₂) for varying the charge in said retrace capacitor as a function of said modulating signal; characterized by
f) a second raster distortion correction switch circuit means (Q₁) for correcting inside raster distortion coupled to said trace capacitor (C₂₃) for varying the charge in said trace capacitor as a function of said modulating signal; and,
g) a resonant circuit (L₁, C₁) coupled from said trace capacitor (C₂₃) to said second raster distortion correction switch circuit means (Q₁).

2. A deflection apparatus according to Claim 1, characterized in that said second switch circuit means (Q₁) couples said retrace capacitor (C₃) in series with said resonant circuit (L₁, C₁).

3. A deflection apparatus according to Claim 2, characterized in that said second switch circuit means (Q₁) is coupled across said distortion correction retrace capacitor (C₃).

4. A deflection apparatus according to Claim 2, characterized in that said second switch circuit means (Q₁) is transformer coupled across said distortion correction retrace capacitor (C₃).

5. A deflection apparatus according to Claim 1, characterized in that said second switch circuit means (Q₁) comprises a controllable switch; and characterized by
feedback means (Q₂, Q₃, Q₄, Q₅, Q₇) coupled from a main current conducting terminal of said controllable switch (Q₁) to a control terminal thereof.

6. A deflection apparatus according to Claim 5, characterized in that said feedback means comprises a transistor amplifier.

7. A deflection apparatus according to Claim 1, characterized in that said first raster distortion correction switch circuit means (Q₂₀) corrects for outside raster distortion.

8. A deflection apparatus according to Claim 7, characterized by a deflection transformer (T₂₀), said means for correcting for outside raster distortion being coupled between said deflection switch (Q₂₁) and a source of supply power (+135 V) through said deflection transformer.

9. A deflection apparatus according to Claim 8, characterized in that said deflection rate is a horizontal deflection frequency, and said means for correcting outside raster distortion comprises a switch (Q₂₀) controlled as a function of vertical deflection.

10. A deflection apparatus according to Claim 1, characterized in that said deflection rate is a horizontal deflection frequency and said second frequency is related to a vertical deflection frequency.

11. A deflection apparatus according to Claim 5, characterized by a capacitance (C₃) coupled across said controllable switch (Q₁).

12. A deflection apparatus according to Claim 5, characterized in that said controllable switch (Q₁) is conductive during said trace interval, and becomes non-conductive during said retrace interval.

13. A deflection apparatus according to Claim 12, characterized in that said controllable switch (Q₁) becomes non-conductive at a variable point in time during the first half of said retrace interval.

## Patentansprüche

1. Ablenkvorrichtung mit einer unabhängigen inneren und äußeren Rasterverzerrungs-Korrektur mit folgenden Merkmalen:
a) eine mit einem Hinlaufkondensator (C₂₃) für eine S-Korrektur verbundene Ablenkwicklung (L_{H}), wobei die Kombination parallel zu einem Rücklaufkondensator (C₂₂) liegt,
b) eine Quelle eines Eingangssignals (SYNC.) mit einer ersten Frequenz, wobei die erste Frequenz eine Ablenkfrequenz ist,
c) ein Ablenkschalter (Q₂₁), der mit der Ablenkwicklung (L_{H}) verbunden ist und auf die Quelle des Eingangssignals anspricht, um in der Ablenkwicklung während eines Hinlaufintervalls einen Hinlaufstrom (i₁) und während eines Rücklaufintervalls eine Rücklaufspannung (V₂) zu erzeugen,
d) eine Quelle eines Modulationssignals mit einer zweiten Frequenz,
e) erste Schaltmittel für die Korrektur einer Rasterverzerrung zur Korrektur einer äußeren Rasterverzerrung, die mit dem Rücklaufkondensator (C₂₂) verbunden sind und die Ladung in diesem Rücklaufkondensator in Abhängigkeit von dem Modulationssignal ändern, gekennzeichnet durch
f) zweite Schaltmittel (Q₁) zur Korrektur einer Rasterverzerrung zur Korrektur einer inneren Rasterverzerrung, die mit dem Hinlaufkondensator (C₂₃) verbunden sind und die Ladung in dem Hinlaufkondensator in Abhängigkeit von dem Modulationssignal ändern, und
g) eine Resonanzschaltung (L₁, C₁) zwischen dem Hinlaufkondensator (C₂₃) und den zweiten Schaltmitteln (Q₁) für die Korrektur der Rasterverzerrung.

2. Ablenkvorrichtung nach Anspruch 1, dadurch gekennzeichnet, daß die zweiten Schaltmittel (Q₁) den Rücklaufkondensator (C₃) in Reihe mit der Resonanzschaltung (L₁, C₁) schalten.

3. Ablenkvorrichtung nach Anspruch 2, dadurch gekennzeichnet, daß die zweiten Schaltmittel (Q₁) über dem Rücklaufkondensator (C₃) für die Korrektur der Verzerrung liegen.

4. Ablenkvorrichtung nach Anspruch 2, dadurch gekennzeichnet, daß die zweiten Schaltmittel (Q₁) über eine Transformatorkopplung über dem Rücklaufkondensator (C₃) für die Verzerrungskorrektur liegen.

5. Ablenkvorrichtung nach Anspruch 1, dadurch gekennzeichnet, daß die zweiten Schaltmittel (Q₁) einen steuerbaren Schalter enthalten, und gekennzeichnet durch Rückkopplungsmittel (Q₂, Q₃, Q₄, Q₅, Q₇), die zwischen einer den Hauptstrom führenden Klemme des steuerbaren Schalters (Q₁) und dessen Steuerklemme liegen.

6. Ablenkvorrichtung nach Anspruch 5, dadurch gekennzeichnet, daß die Rückkopplungsmittel einen Transistorverstärker enthalten.

7. Ablenkvorrichtungnach Anspruch 1, dadurch gekennzeichnet, daß die ersten Schaltmittel (Q₂₀) für die Korrektur der Rasterverzerrung die äußere Rasterverzerrung korrigieren.

8. Ablenkvorrichtung nach Anspruch 7, gekennzeichnet durch einen Ablenktransformator (T₂₀), wobei die Mittel zur Korrektur der äußeren Rasterverzerrung über den Ablenktransformator zwischen dem Ablenkschalter (Q₂₁) und einer Betriebsspannungsquelle (+135V) liegen.

9. Ablenkvorrichtung nach Anspruch 8, dadurch gekennzeichnet, daß die Ablenkfrequenz eine Horizontalablenkfrequenz ist und die Mittel zur Korrektur der äußeren Rasterverzerrung einen Schalter (Q₂₀) enthalten, der in Abhängigkeit von der Vertikalablenkung gesteuert wird.

10. Ablenkvorrichtung nach Anspruch 1, dadurch gekennzeichnet, daß die Ablenkfrequenz eine Horizontalablenkfrequenz ist und die zweite Frequenz mit einer Vertikalablenkfrequenz in Beziehung steht.

11. Ablenkvorrichtung nach Anspruch 5, gekennzeichnet durch eine Kapazität (C₃) über dem steuerbaren Schalter (Q₁).

12. Ablenkvorrichtung nach Anspruch 5, dadurch gekennzeichnet, daß der steuerbare Schalter (Q₁) während des Hinlaufintervalls leitend ist und während des Rücklaufintervalls nichtleitend wird.

13. Ablenkvorrichtung nach Anspruch 12, dadurch gekennzeichnet, daß der steuerbare Schalter (Q₁) an einem variablen Zeitpunkt während der ersten Hälfte des Rücklaufintervalls nichtleitend wird.

## Revendications

1. Dispositif de déviation avec correction indépendante de la distorsion de la partie interne et de la partie externe de la trame de balayage, comprenant :
a) un enroulement de déviation (L_{H}) couplé à un condensateur de trace de correction en S (C₂₃), ladite combinaison étant couplée en parallèle à un condensateur de retour de balayage (C₂₂);
b) une source d'un signal d'entrée (synch) à une première fréquence, ladite première fréquence étant à une certaine cadence de déviation;
c) un commutateur de déviation (Q₂₁) couplé audit enroulement de déviation (L_{H}) et sensible à ladite source d'un signal d'entrée en vue de générer dans ledit enroulement de déviation un courant de trace (i₁) durant un intervalle de trace et une tension de retour de balayage (V₂) durant l'intervalle de retour de balayage;
d) une source de signal modulant à une deuxième fréquence;
e) un premier moyen (Q₂₀) à circuit de commutation de correction de la distorsion de la trame de balayage pour corriger la distorsion de la partie interne de la trame de balayage, couplé audit condensateur de retour de balayage (C₂₂) pour faire varier la charge dans ledit condensateur de retour de balayage en fonction dudit signal modulant; caractérisé par
f) un deuxième moyen (Q₁) à circuit de commutation de correction de la distorsion de la trame de balayage pour corriger la distorsion de la partie externe de la trame de balayage, couplé audit condensateur de trace (C₂₃) pour faire varier la charge dans ledit condensateur de trace en fonction dudit signal modulant; et
g) un circuit résonnant (L₁, C₁) couplé dudit condensateur de trace (C₂₃) audit deuxième moyen (Q₁) à circuit de commutation de correction de la distorsion de la trame de balayage.

2. Dispositif de déviation selon la revendication 1, caractérisé en ce que ledit deuxième moyen (Q₁) à circuit de commutation couple ledit condensateur de retour de balayage (C₃) en série avec ledit circuit résonnant (L₁, C₁).

3. Dispositif de déviation selon la revendication 2, caractérisé en ce que ledit deuxième moyen (Q₁) à circuit de commutation est couplé aux bornes dudit condensateur de retour de balayage (C₃) de correction de la distorsion.

4. Dispositif de déviation selon la revendication 2, caractérisé en ce que ledit deuxième moyen (Q₁) à circuit de commutation est couplé par transformateur aux bornes dudit condensateur de retour de balayage (C₃) de correction de la distorsion.

5. Dispositif de déviation selon la revendication 1, caractérisé en ce que ledit deuxième moyen (Q₁) à circuit de commutation comprend un commutateur pouvant être commandé; et caractérisé par
un moyen de rétroaction (Q₂; Q₃; Q₄; Q₅; Q₇) couplé d'une borne principale conductrice du courant dudit commutateur (Q₁) pouvant être commandé à une borne de commande de celui-ci.

6. Dispositif de déviation selon la revendication 5, caractérisé en ce que ledit moyen de rétroaction comprend un amplificateur à transistor.

7. Dispositif selon la revendication 1, caractérisé en ce que ledit premier moyen (Q₂₀) à circuit de commutation de correction de la distorsion de la trame de balayage corrige la distorsion de la partie externe de la trame de balayage.

8. Dispositif de déviation selon la revendication 7, caractérisé par un transformateur de déviation (T₂₀), ledit moyen pour corriger la distorsion de la partie externe de la distorsion étant couplé entre ledit commutateur de déviation (Q₂₁) et une source d'alimentation (+135 V) par l'intermédiaire dudit transformateur de déviation.

9. Dispositif de déviation selon la revendication 8, caractérisé en ce que ladite cadence de déviation est une fréquence de déviation horizontale, et ledit moyen pour corriger la distorsion de la partie externe de la trame de balayage comprend un commutateur (Q₂₀) commandé en fonction de la déviation verticale.

10. Dispositif de déviation selon la revendication 1, caractérisé en ce que ladite cadence de déviation est une fréquence de déviation horizontale et ladite deuxième fréquence est liée à une fréquence de déviation verticale.

11. Dispositif de déviation selon la revendication 5, caractérisé par une capacité (C₃) couplée aux bornes dudit commutateur (Q₁) pouvant être commandé.

12. Dispositif de déviation selon la revendication 5, caractérisé en ce que ledit commutateur (Q₁) pouvant être commandé est conducteur pendant ledit intervalle de trace, et devient non conducteur pendant ledit intervalle de retour de balayage.

13. Dispositif de déviation selon la revendication 12, caractérisé en ce que ledit commutateur (Q₁) pouvant être commandé devient non conducteur à un instant variable dans le temps, durant la première moitié dudit intervalle de retour de balayage.
